# EUROPEAN PATENT APPLICATION

(11) **EP 2 977 945 A1**
(43) Date of publication of application: **27.01.2016**
(21) Application number: 15177995.6
(22) Date of filing: 23.07.2015
(51) Int. Cl.: G06Q 10/10

(54) **METHOD AND DEVICE FOR AGENDA MANAGEMENT**

(30) Priority: 23.07.2014 CN 201410351493
(71) Applicant: Xiaomi Inc., Beijing 100085 (CN)
(72) Inventor: LI, Mengying, 100085 Beijing (CN); XU, Meng, 100085 Beijing (CN); WANG, Wenlin, 100085 Beijing (CN)
(74) Representative: Delumeau, François Guy

(57) **Abstract**

The present disclosure discloses a method and a device for agenda management. The method includes: intercepting (S11) an event notification message sent to a notification bar through a set interface, the event notification message including event contents and an event occurrence time; and generating (S12) a memo agenda according to the event contents and the event occurrence time.

## Description

### TECHNICAL FIELD

The present disclosure relates to the field of information and communication, and more particularly, to a method and a device for agenda management.

### BACKGROUND

An agenda management application is an application that is widely used in a smart terminal. The user of the smart terminal may initiatively set reminders of affairs in the agenda management application, for example, set to remind at 3:00 pm on July 21 that there is an important conference at 3:30 pm, so as to be not forgotten.

In life, there are multiple affairs that cannot be predicted and initiatively set into the agenda management application by the user, for example, a demand for an umbrella due to change of weather or drop of commodity prices in a shopping cart of a shopping website. At present, these affairs are all monitored by corresponding third party applications, and are reminded to the user in a manner of notification bar. For example, a weather application monitors the change of weather and publishes a weather change notification in the notification bar, and a shopping application monitors the commodity prices and publishes a commodity price drop notification in the notification bar. This notification bar does not have time organization and memo function.

### SUMMARY

In order to overcome the problems in the related art, the present disclosure provides a method and a device for agenda management.

According to a first aspect, the invention relates to a method for agenda management, comprising:
intercepting an event notification message sent to a notification bar through a set interface, the event notification message including event contents and an event occurrence time; and
generating a memo calendar according to the event contents and the event occurrence time.

In the meaning of the invention, the term "notification bar" is used to designate an area for displaying notification received from a third party applications. Such a notification bar is for example used in android system.

In an embodiment, the method further comprises:
determining a transmitter of the event notification message;
judging whether the transmitter is allowed to call the set interface to push the event notification message; and
if the transmitter is allowed to call the set interface to push the event notification message, performing the step of generating the memo calendar according to the event contents and the event occurrence time.

In an embodiment, the method further comprises:
if the transmitter is not allowed to call the set interface to push the event notification message, transmitting a feedback of rejecting to push the event notification message to the transmitter.
In an embodiment, the step of judging whether the transmitter is allowed to call the set interface to push the event notification message comprises:
judging whether the transmitter is listed in a registration list of the set interface;
if the transmitter is listed in the registration list of the set interface, judging whether the event notification message belongs to a push entry set by the transmitter; and
if the event notification message belongs to the push entry set by the transmitter, determining that the transmitter is allowed to call the set interface to push the event notification message.

In an embodiment, the step of receiving the event notification message through the set interface comprises:
receiving the event notification message through the set interface; and
transforming the event notification message into a set format.

In an embodiment, the step of generating the memo calendar according to the event contents and the event occurrence time comprises:
storing the event contents into an agenda with a date corresponding to the event occurrence time; and
setting a reminder event within a predetermined time period before the event occurrence time.

According to a second aspect, the invention relates to a device for agenda management, comprising:
an intercepting module configured to intercept an event notification message sent to a notification bar through a set interface, the event notification message including event contents and an event occurrence time; and
a generation module configured to generate a memo calendar according to the event contents and the event occurrence time.

In an embodiment, the device further comprises:
a determination module configured to determine a transmitter of the event notification message;
a judgment module configured to judge whether the transmitter is allowed to call the set interface to push the event notification message; and
a triggering module configured to trigger the generation module to perform operations when the judgment module judges that the transmitter is allowed to call the set interface to push the event notification message.

In an embodiment, the device further comprises:
a feedback module configured to transmit a feedback of rejecting to push the event notification message to the transmitter when the judgment module judges that the transmitter is not allowed to call the set interface to push the event notification message.

In an embodiment, the judgment module comprises:
a first judgment submodule configured to judge whether the transmitter is listed in a registration list of the set interface;
a second judgment submodule configured to judge whether the event notification message belongs to a push entry set by the transmitter when the first judgment submodule judges that the transmitter is listed in the registration list of the set interface; and
a determination submodule configured to determine that the transmitter is allowed to use the set interface to push the time notification message when the second judgment submodule judges that the event notification message belongs to the push entry set by the transmitter.

In an embodiment, the intercepting module comprises:
a receiving submodule configured to receive the event notification message through the set interface; and
a transforming submodule configured to transform the event notification message into a set format.

In an embodiment, the generation module comprises:
a storage submodule configured to store the event contents in an agenda with a date corresponding to the event occurrence time; and
a setting submodule configured to set a reminder event within a predetermined time period before the event occurrence time.

According to a third aspect, the invention relates to a device for agenda management, comprising:
a processor; and
a memory for storing instructions executable by the processor;
wherein the processor is configured to:
receive an event notification message through a set interface, the event notification message including event contents and an event occurrence time; and
generate a memo calendar according to the event contents and the event occurrence time.

In one embodiment, the steps of the method for agenda management are determined by computer program instructions.

Consequently, according to a fourth aspect, the invention is also directed to a computer program for executing the steps of a method for agenda management as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may comprise the following advantageous effects:

the set interface is provided to receive the event notification message pushed by a third party application and the memo calendar is generated according to the event notification message, thereby replacing a user to add some affairs into the agenda management initiatively, thus implementing time organization and possessing memo function simultaneously.

It is to be understood that both the foregoing general description and the following detailed description are exemplary and explanatory only and are not restrictive of the invention.

### BRIEF DESCRIPTION OF THE DRAWINGS

Fig. 1 is a flow chart showing a method for agenda management, according to an exemplary embodiment;
Fig. 2 is a flow chart showing a method for agenda management, according to an exemplary embodiment;
Fig. 3 is a block diagram showing an application setting interface, according to an exemplary embodiment;
Fig. 4 is a block diagram showing a predetermined time period setting interface, according to an exemplary embodiment;
Fig. 5 is a block diagram showing a device for agenda management, according to an exemplary embodiment;
Fig. 6 is a block diagram showing a device for agenda management, according to an exemplary embodiment;
Fig. 7 is a block diagram showing a structure of an intercepting module, according to an exemplary embodiment;
Fig. 8 is a block diagram showing a structure of a generation module, according to an exemplary embodiment;
Fig. 9 is a block diagram showing a structure of a judgment module, according to an exemplary embodiment; and
Fig. 10 is a block diagram showing a device for agenda management, according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatus and methods consistent with some aspects associated with the invention as recited in the appended claims.

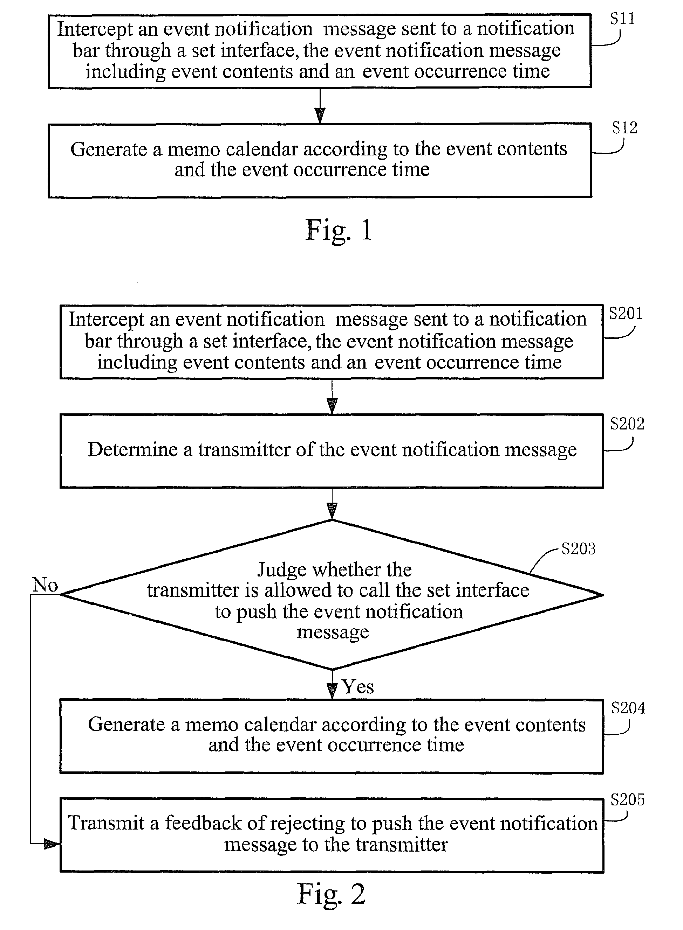

Fig. 1 is a flow chart showing a method for agenda management, according to an exemplary embodiment, which may be applied to a terminal having an agenda management application. The method comprises the following steps.

In step 11, an event notification message sent to a notification bar is intercepted through a set interface, the event notification message including event contents and an event occurrence time.

In step 12, a memo agenda is generated according to the event contents and the event occurrence time.

In an embodiment as shown in Fig. 1, there is provided a set interface to receive an event notification message pushed by a third party application and a memo agenda is generated according to the event notification message, thereby replacing a user to add some affairs into the agenda management initiatively, thus implementing time organization and possessing memo function simultaneously.

Fig. 2 is a flow chart showing an agenda management, according to an exemplary embodiment, which may be applied to a terminal having an agenda management application. The method comprises the following steps:

In step 201, an event notification message sent to a notification bar is intercepted through a set interface, the event notification message including event contents and an event occurrence time.

In this step, the set interface is preset, and a third party application may push an event notification message through calling the set interface.

The set interface has a fixed message setting format. After the event notification message is received, the received event notification message needs to be transformed into the set format firstly.

The event contents in the event notification message may be different based upon different third party applications. For example, the event contents may either be change of whether or drop of commodity prices in a shopping cart.

In step 202, a transmitter of the event notification message is determined.

In this step, the third party application, when pushing the event notification message, may carry such information that can indicate an identity label thereof and the like, based upon which the transmitter of the event notification message may be determined.

In step 203, whether the transmitter is allowed to call the set interface to push the event notification message is judged; if the transmitter is allowed to call the set interface to push the event notification message, step 204 is performed; otherwise, step 205 is performed.

In this step, the following implementations may be adopted to judge whether the transmitter is allowed to call the set interface to push the event message.

The set interface in the embodiment may be provided to the third party application for calling.

As an optional implementation, the set interface needs to be registered before being called by the third party application; therefore, there is a registration list corresponding to the set interfaces, and information such as labels of all the successfully registered third party applications and the like is recorded in the registration list. Further, the third party application may further provide a push entry when registering the set interface. For example, if the third party application is a shopping application, the push entry may include an entry associated with price and an entry associated with new product pushing.

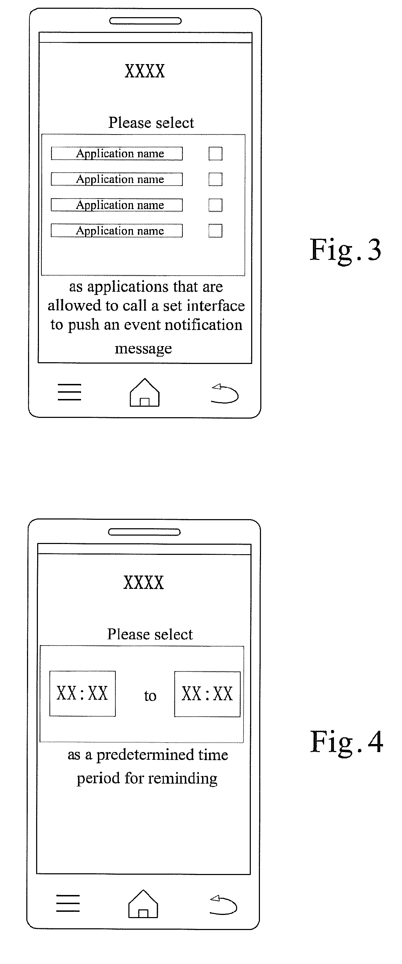

As another optional implementation, the user using the terminal may autonomously set the registration list of the set interface. As shown in Fig. 3, the user may select, among all the applications installed in an operating system of the terminal, the applications that are allowed to call the set interface to push the event notification message.

When judging whether the transmitter is allowed to call the set interface to push the event notification message, whether the transmitter of the event notification message is listed in the registration list of the set interface may be judged firstly. If the transmitter is listed in the registration list of the set interface, then whether the received event notification message belongs to the push entry set by the transmitter is further judged. If the received event notification message belongs to the push entry set by the transmitter, then the transmitter is determined to be allowed to call the set interface to push the event notification message.

In step 204, a memo agenda is generated according to the event contents and the event occurrence time.

In this step, the event contents may be stored in an agenda management application, for example, stored in an agenda with a date corresponding to the event occurrence time; then a reminder event within a predetermined time period before the event occurrence may be further set, so as to remind the user within the predetermined time period by vibrating, ringing and the like. The predetermined time period here may either be set by the user, or be set by a system by default. As shown in Fig. 4, the user may autonomously set the foregoing predetermined time period through such an interface.

In step 205, a feedback of rejecting to push the event notification message is transmitted to the transmitter.

An example is presented hereinafter by using a third party application that forecasts weather in the terminal. It is supposed that the weather application has already registered the set interface mentioned in the above method flow, the current time is 7:00 pm, and the weather application monitors that there will be moderate rain in tomorrow morning. The weather application calls the set interface, and pushes an event notification message carrying contents of "there will be moderate rain" and "tomorrow morning" therein. The terminal, after receiving the event notification message, firstly determines whether the weather application is allowed to call the set interface to push the event notification message, and then stores the event the contents "there will be moderate rain" into the agenda of the date corresponding to the event occurrence time "tomorrow morning" in the agenda management application, i.e. stores the event contents in the agenda of tomorrow, and finally sets a reminder event at 8:00 am of tomorrow.

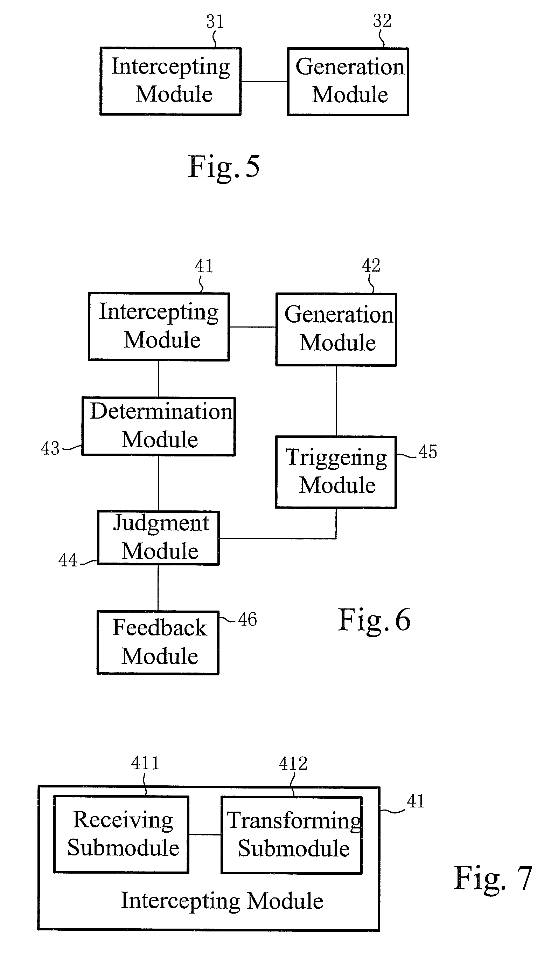

Fig. 5 is a block diagram showing a device for agenda management, according to an exemplary embodiment. Referring to Fig. 5, the device includes an intercepting module 31 and a generation module 32.

The intercepting module 31 is configured to receive an event notification message through a set interface, the event notification message including event contents and an event occurrence time.

The generation module 32 is configured to generate a memo agenda according to the event contents and the event occurrence time.

In an embodiment as shown in Fig. 5, there is provided a set interface to receive an event notification message pushed by a third party application and a memo agenda is generated according to the event notification message, thereby replacing a user to add some affairs into the agenda management initiatively, thus implementing time organization and possessing memo function simultaneously.

Fig. 6 is a block diagram showing a device for agenda management, according to an exemplary embodiment. Referring to Fig. 6, the device includes an intercepting module 41, a generation module 42, a determination module 43, a judgment module 44, a triggering module 45 and a feedback module 46.

The intercepting module 41 is configured to receive an event notification message through a set interface, the event notification message including event contents and an event occurrence time.

As an optional implementation, as shown in Fig. 7, the intercepting module 41 may include a receiving submodule 411 and a transforming submodule 412.

The receiving submodule 411 is configured to receive the event notification message through the set interface.

The transforming submodule 412 is configured to transform the event notification message into a set format.

The generation module 42 is configured to be triggered by the triggering module 45 and generate a memo agenda according to the event contents and the event occurrence time.

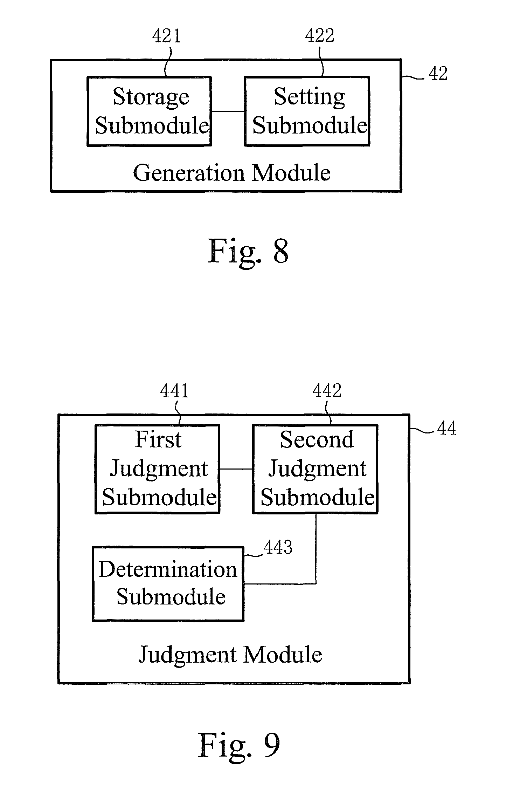

As an optional implementation, as shown in Fig. 8, the generation module 42 may include a storage submodule 421 and a setting submodule 422.

The storage submodule 421 is configured to store the event contents in an agenda with a date corresponding to the event occurrence time.

The setting submodule 422 is configured to set a reminder event within a predetermined time period before the event occurrence time.

The determination module 43 is configured to determine a transmitter of the event notification message.

The judgment module 44 is configured to judge whether the transmitter is allowed to call the set interface to push the event notification message.

The judgment module 44 may implement the judgment function through different implementations. As an optional implementation, as shown in Fig. 9, the judgment module 44 may include a first judgment submodule 441, a second judgment submodule 442 and a determination submodule 443.

The first judgment submodule 441 is configured to judge whether the transmitter is listed in a registration list of the set interface.

The second judgment submodule 442 is configured to judge whether the event notification message belongs to a push entry set by the transmitter when the first judgment submodule 441 judges that the transmitter is listed in the registration list of the set interface.

The determination submodule 443 is configured to determine that the transmitter is allowed to use the set interface to push the time notification message when the second judgment submodule 442 judges that the event notification message belongs to the push entry set by the transmitter.

The triggering module 45 is configured to trigger the generation module 45 to perform operations when the judgment module 44 judges that the transmitter is allowed to call the set interface to push the event notification message.

The feedback module 46 is configured to transmit a feedback of rejecting to push the event notification message to the transmitter when the judgment module 44 judges that the transmitter is not allowed to call the set interface to push the event notification message.

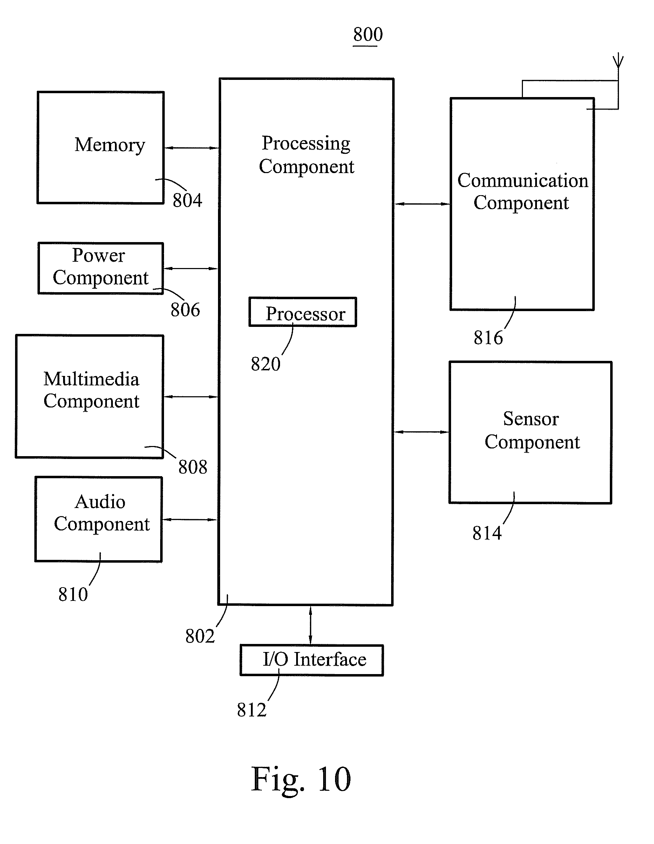

Fig. 10 is a block diagram showing a device 800 for agenda management, according to an exemplary embodiment. For example, the device 800 may be a mobile phone, a computer, a digital broadcast terminal, a messaging device, a gaming console, a tablet, a medical device, exercise equipment, a personal digital assistant, and the like.

Referring to Fig. 10, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for agenda management, **characterized in that**, the method comprises:
intercepting (S11, S201) an event notification message sent to a notification bar through a set interface, the event notification message comprising event contents and an event occurrence time; and
generating (S12, S204) a memo agenda according to the event contents and the event occurrence time.

2. The method of claim 1, **characterized in that**, the method further comprises:
determining (S202) a transmitter of the event notification message;
judging (S203) whether the transmitter is allowed to call the set interface to push the event notification message; and
if the transmitter is allowed to call the set interface to push the event notification message, performing (S204) the step of generating the memo agenda according to the event contents and the event occurrence time.

3. The method of claim 2, **characterized in that**, the method further comprises:
if the transmitter is not allowed to call the set interface to push the event notification message, transmitting (S205) a feedback of rejecting to push the event notification message to the transmitter.

4. The method according to any one of claims 2 to 3, **characterized in that**, the step of judging (S203) whether the transmitter is allowed to call the set interface to push the event notification message comprises:
judging whether the transmitter is listed in a registration list of the set interface;
if the transmitter is listed in the registration list of the set interface, judging whether the event notification message belongs to a push entry set by the transmitter; and
if the event notification message belongs to the push entry set by the transmitter, determining that the transmitter is allowed to call the set interface to push the event notification message.

5. The method according to any one of claims 1 to 4, **characterized in that**, the step of intercepting (S11, S201) the event notification message sent to a notification bar through the set interface comprises:
receiving the event notification message through the set interface; and
transforming the event notification message into a set format.

6. The method according to any one of claims 1 to 5, **characterized in that**, the step of generating (S12, S204) the memo agenda according to the event contents and the event occurrence time comprises:
storing the event contents into an agenda with a date corresponding to the event occurrence time; and
setting a reminder event within a predetermined time period before the event occurrence time.

7. A device for agenda management, **characterized in that**, the device comprises:
a intercepting module (31, 41) configured to intercept an event notification message sent to a notification bar through a set interface, the event notification message comprising event contents and an event occurrence time; and
a generation module (32, 42) configured to generate a memo agenda according to the event contents and the event occurrence time.

8. The device of claim 7, **characterized in that**, the device further comprises:
a determination module (43) configured to determine a transmitter of the event notification message;
a judgment module (44) configured to judge whether the transmitter is allowed to call the set interface to push the event notification message; and
a triggering module (45) configured to trigger the generation module to perform operations when the judgment module (44) judges that the transmitter is allowed to call the set interface to push the event notification message.

9. The device of claim 8, **characterized in that**, the device further comprises:
a feedback module (46) configured to transmit a feedback of rejecting to push the event notification message to the transmitter when the judgment module (44) judges that the transmitter is not allowed to call the set interface to push the event notification message.

10. The device according to any one of claims 8 to 9, **characterized in that**, the judgment module (44) comprises:
a first judgment submodule (441) configured to judge whether the transmitter is listed in a registration list of the set interface;
a second judgment submodule (442) configured to judge whether the event notification message belongs to a push entry set by the transmitter when the first judgment submodule (441) judges that the transmitter is listed in the registration list of the set interface; and
a determination submodule (443) configured to determine that the transmitter is allowed to use the set interface to push the time notification message when the second judgment submodule (442) judges that the event notification message belongs to the push entry set by the transmitter.

11. The device according to any one of claims 7-10, **characterized in that**, the intercepting module (31, 41) comprises:
a receiving submodule (411) configured to receive the event notification message through the set interface; and
a transforming submodule (412) configured to transform the event notification message into a set format.

12. The device according to any one of claims 7-10, **characterized in that**, the generation module (32, 42) comprises:
a storage submodule (421) configured to store the event contents in an agenda with a date corresponding to the event occurrence time; and
a setting submodule (422) configured to set a reminder event within a predetermined time period before the event occurrence time.

13. A device for agenda management, **characterized in that**, the device comprises:
a processor; and
a memory for storing instructions executable by the processor;
wherein the processor is configured to:
receive an event notification message through a set interface, the event notification message comprising event contents and an event occurrence time; and
generate a memo agenda according to the event contents and the event occurrence time.

14. A computer program including instructions for executing the steps of a method for agenda management according to any one of claims 1 to 6 when said program is executed by a computer.

15. A recording medium readable by a computer and having recorded thereon a computer program including instructions for executing the steps of a method for agenda management according to any one of claims 1 to 6.
